# FASCICULE DE BREVET EUROPEEN

(11) **EP 0 857 084 B1**
(45) Date de publication et mention de la délivrance du brevet: **08.09.1999**
(21) Numéro de dépôt: 95936602.2
(22) Date de dépôt: 24.10.1995
(51) Int. Cl.: B02C 4/02, B02C 4/42

(54) **APPAREIL POUR LE TRAITEMENT DE MATIERES CAOUTCHOUTEUSES**
VORRICHTUNG ZUR ENTSORGUNG VON GUMMIMATERIAL
APPARATUS FOR PROCESSING RUBBER-BASED MATERIALS

(43) Date de publication de la demande: 12.08.1998
(73) Titulaire: Perrin, Bruno, 42530 Saint Genest Lerpt (FR); Perrin, Daniel, 42270 Saint Priest en Jarez (FR)
(72) Inventeur: Perrin, Bruno, 42530 Saint Genest Lerpt (FR); Perrin, Daniel, 42270 Saint Priest en Jarez (FR)
(74) Mandataire: Thivillier, Patrick
(86) Numéro de dépôt international: FR9501408
(87) Numéro de publication internationale: WO9715397

(56) Documents cités:
- EP-A- 0 567 759
- WO-A-93/13858
- WO-A-94/07670
- DE-A- 3 830 959
- DE-U- 8 901 786

## Description

L'invention se rattache notamment au secteur technique de la récupération du caoutchouc usagé, plus particulièrement de tout type de matière caoutchouteuse ou plastique, intégrant dans son épaisseur une armature de rigidité, généralement métallique. Avantageusement, l'invention trouve une application particulièrement avantageuse pour le traitement des pneumatiques, sans pour cela exclure d'autres applications parmi lesquelles on peut citer le traitement de certains câbles électriques.

On sait que les pneumatiques usagés de véhicules légers ou de véhicules du type poids lourds, posent un réel problème pour leur stockage, transport et recyclage.

On a proposé de nombreuses installations pour permettre de recycler ou de traiter les pneumatiques, en vue d'applications diverses, parmi lesquelles on peut citer les combustibles. Les pneumatiques ainsi traités peuvent également être utilisés pour certains équipements routiers.

Généralement, les pneumatiques sont soumis à des opérations aptes à les réduire à une certaine granulométrie et éventuellement, à séparer les armatures métalliques et/ou textiles de la matière caoutchouteuse.

Pour obtenir ce résultat, on utilise généralement des appareils du type broyeur. Cet état de la technique peut être illustré par l'enseignement des brevets FR 2 377 271, FR 2 419 110, FR 2 451 819, EP 0 434 975. Ces différentes techniques utilisent des outils de coupe pour, dans un premier temps, réduire en morceaux le pneumatique. Cette solution n'est pas satisfaisante, car les morceaux obtenus présentent encore l'armature métallique. Des problèmes apparaissent donc si l'on veut brûler de tels morceaux, compte-tenu de la présence de l'acier. En outre, l'armature métallique détériore très rapidement les outils de coupe.

Le brevet européen 0 561 285 divulgue une installation pour le traitement de pneumatiques par moyens de destruction, sans enlever préalablement les éléments métalliques mais en utilisant des outils de coupe spéciaux conformés pour avoir une usure sensiblement nulle.

Si l'on veut séparer le caoutchouc de l'armature métallique, il est nécessaire d'avoir une installation supplémentaire, relativement complexe dans ses moyens de mise en oeuvre. Toutes les installations connues sont d'un encombrement très important avec une infra-structure particulière et ne permettent pas de traiter les pneumatiques directement à l'endroit où ils se trouvent. Il est généralement nécessaire de transporter les pneumatiques au lieu dit de l'installation, qui constitue un ensemble statique.

Ce transport augmente en conséquent les coûts de traitement des pneumatiques.

On peut citer également le brevet WO-A-9313858 qui décrit un dispositif de réduction de carcasse de pneumatique basé sur l'écrasement des articles à traiter par leur passage entre des rouleaux presseurs. Ce dispositif comporte des rouleaux coopérant avec un moyen de réaction constitué soit d'une plaque fixe, soit d'un autre rouleau cylindrique. Le système fonctionne par écrasement de sorte qu'il est nécessaire de circonscrire la zone de compression. Dans ce but, les rouleaux présentent des épaulements venant en regard des moyens de réaction.

Dans une forme préférée, ce dispositif associe deux rouleaux permettant ainsi d'éviter l'apparition de contraintes au sein de la matière à traiter. Il en résulte que le principe de traitement repose exclusivement sur une forte compression, de sorte que la présence de frottements associés à une forte pression provoquent un échauffement inacceptable de la matière à traiter.

On connait également par le modèle d'utilité allemand DE-U-8901786, une machine de traitement de pneumatique usagé au moyen de deux rouleaux dont les vitesses linéaires sont différentes. Il apparaît cependant que l'utilisation de deux rouleaux ne provoque de cisaillement que sur une zone réduite des pneumatiques, ce qui ne permet pas d'obtenir une cohésion efficace.

L'invention s'est fixée pour but de remédier à ces inconvénients, de manière simple, sûre, efficace et rationnelle.

Le problème que se propose de résoudre l'invention est de pouvoir séparer la matière caoutchouteuse de tous types d'armatures ou de renfort, de toutes natures, métallique et/ou textile, d'un produit quelconque, notamment d'un pneumatique, sans faire appel à des outils de coupe, mais en utilisant comme moyen de coupe, directement l'armature métallique.

Un autre problème que se propose de résoudre l'invention, est de pouvoir traiter les articles du type pneumatique et autres, à un endroit quelconque, par exemple directement sur le lieu où ils sont produits ou stockés, en opposition aux installations statiques.

Pour résoudre un tel problème, il a été conçu et mis au point un appareil du type de ceux comprenant au moins deux rangs de rouleaux tournants, à axe parallèle, et superposés deux à deux, les articles étant engagés à plat, entre lesdits rouleaux. aptes à assurer en continu et successivement, la décohésion de la matière caoutchouteuse, en vue de la séparer de l'armature métallique, pour constituer une poudre résultant d'un mélange de caoutchouc et de particules métalliques et ou textiles, caractérisé en ce que les rouleaux du premier rang sont entrainés positivement dans le même sens de rotation, à des vitesses linéaires différentes, tandis que les rouleaux de l'autre rang tournent dans l'autre sens pour entrainer par frottement, les articles.

Le problème posé d'assurer la décohésion de la matière caoutchouteuse et sa séparation de l'armature métallique, est résolu en ce que les rouleaux sont conformés et/ou assujettis à des moyens pour exercer un effort de pression sur le pneumatique à traiter, combiné à un mouvement de frottement par déplacement relatif entre ledit pneumatique et lesdits rouleaux.

Avantageusement, lesdits rouleaux délimitent trois zones distinctes et continues correspondant chacune à une fonction, à savoir :
- décohésion primaire de la matière caoutchouteuse, pour la décoller par rapport à l'armature métallique,
- écartement de la matière caoutchouteuse, par rapport à l'armature métallique,
- séparation de la matière caoutchouteuse et de l'armature métallique pour obtenir une poudre.

Pour obtenir ce résultat, les rouleaux sont entrainés à la même vitesse angulaire, et sont, dans chaque zone, de diamètre différent.

Les rouleaux sont agencés pour être entrainés simultanément en rotation au moyen d'un ou plusieurs moteurs, en combinaison ou non avec un organe du type volant d'inertie, pour soumettre le pneumatique à une force de pression pendant un laps de temps très court.

Compte-tenu de la conception de l'appareil, ce dernier peut présenter différentes formes géométriques. Dans ce but, les zones des rouleaux sont disposées soit linéairement, soit en superposition, soit en juxtaposition.

L'invention est exposée, ci-après plus en détail à l'aide des dessins annexés, dans lesquels :
La figure 1 est une vue à caractère purement schématique montrant le principe de l'appareil selon l'invention.

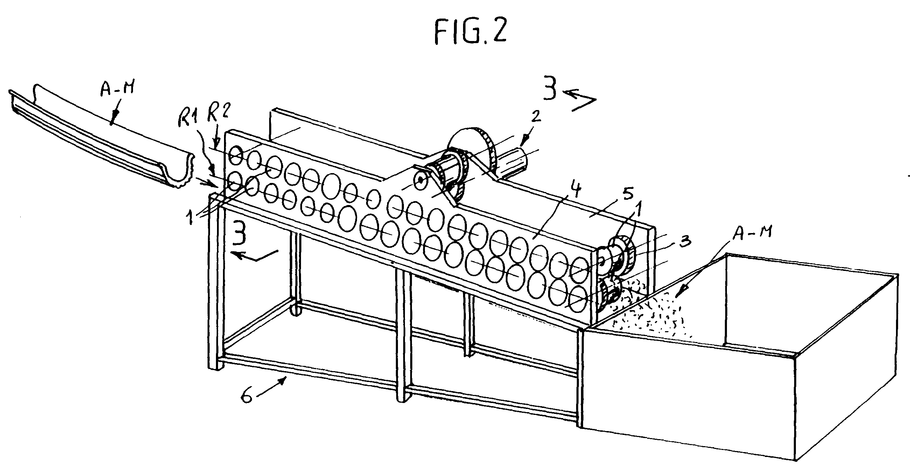

La figure 2 est une vue en perspective d'un exemple de réalisation de l'appareil.

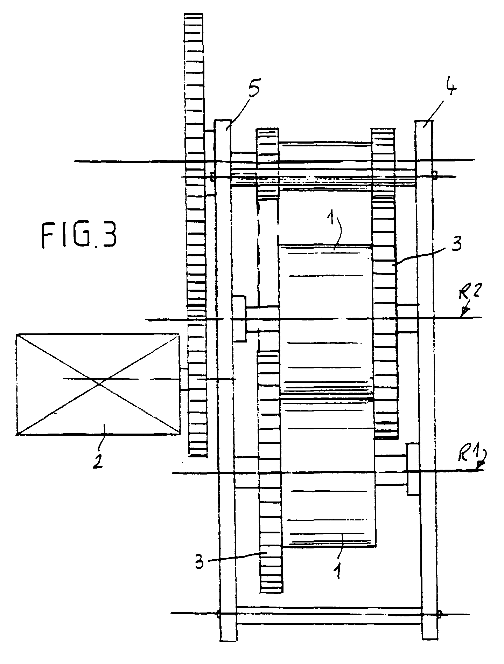

La figure 3 est une vue en coupe transversale considérée selon la ligne 3.3 de la figure 2.

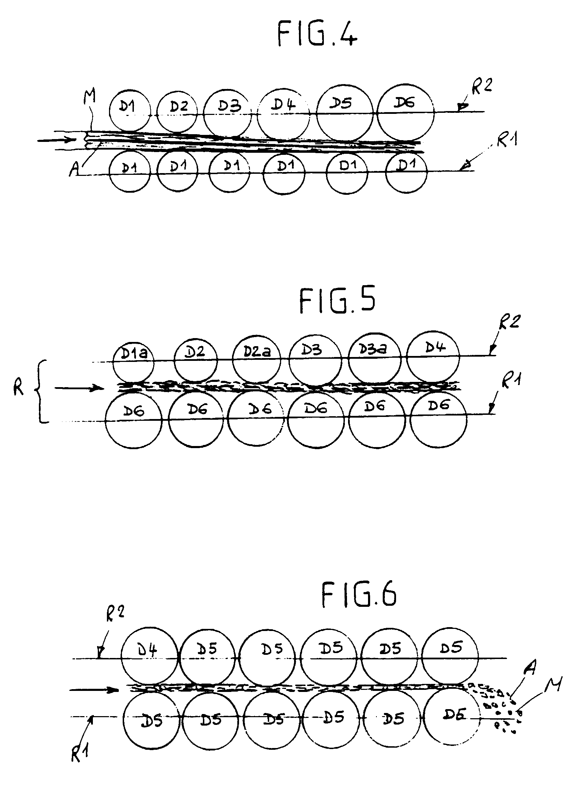

Les figures 4, 5 et 6 sont, à plus grandes échelles, des vues en coupe montrant le principe de traitement des pneumatiques.
Les figures 7, 8 et 9 sont des vues à caractère schématique montrant des exemples nullement limitatif, de géométries possibles de l'appareil.

La suite de la description s'applique, à titre d'exemple indicatif, nullement limitatif, au traitement d'un pneumatique, étant rappelé que l'invention s'applique au traitement de tous articles, à base caoutchouteuse ou plastique, intégrant dans son épaisseur, une armature métallique et/ou textile.

L'appareil selon l'invention, est conformé pour traiter tous types de pneumatiques comprenant d'une manière parfaitement connue, une armature métallique (A) (et/ou textile), noyée dans l'épaisseur d'une matière caoutchouteuse (M). Le but recherché est de pouvoir assurer, en continu et successivement, la décohésion de la matière caoutchouteuse (M), pour la séparer de l'armature métallique (A) et obtenir, à la sortie de l'appareil, une poudre résultant d'un mélange de caoutchouc et de particules métalliques et/ou textiles.

Dans la forme de réalisation illustrée, l'appareil comprend au moins deux rangs (R1) et (R2) de rouleaux tournants (1), à axes parallèles et superposés deux à deux. Les pneumatiques sont engagés à plat, entre les rangs de rouleaux (1).

A cet effet, les pneumatiques sont préalablement découpés transversalement, afin d'être écartés et déployés linéairement ou dépliés à partir des flancs. Les rouleaux (1) de chaque rangs (R1) et (R2) sont entrainés positivement dans le même sens de rotation mais à des vitesses linéaires différentes.

Ces dispositions permettent, d'une manière parfaitement connue, d'entraîner par frottement, les pneumatiques, après les avoir engagés entre les rouleaux.

Selon une caractéristique à la base de l'invention, les rouleaux (1) de chaque rang (R1) et (R2) ou de l'un de ces deux rangs, sont conformés et/ou assujettis à tous types de moyens, pour exercer sur le pneumatique, un effort de pression combiné à un mouvement de frottement par déplacement relatif entre ledit pneumatique et lesdits rouleaux, afin notamment, de supprimer la cohésion de la matière caoutchouteuse (M), pour la séparer de l'armature métallique (A).

Dans ce but, il est apparu avantageux de disposer les rouleaux dans les conditions indiquées précédement, selon trois zones distinctes et continues (Z1) (Z2) (Z3). Chaque zone participe aux résultats rcherchés, en correspondant à une fonction particulière.
La zone (Z1) assure la décohésion primaire de la matière caoutchouteuse pour la décoller de l'armature métallique (A).
La zone (Z2) assure l'écartement de la matière caoutchouteuse (M) par rapport à l'armature (A).
La zone (Z3) assure la séparation de la matière caoutchouteuse (M) et de l'armature métallique (A) pour obtenir une poudre résultant d'un mélange caoutchouc plus acier.

Pour obtenir ce résultat, différentes solutions peuvent être envisagées. La solution ci-après décrite, donne particulièrement satisfaction et est d'une mise en oeuvre relativement simple.

Les rouleaux (1) de chaque rang sont entrainés à la même vitesse angulaire et dans le même sens, comme déjà indiqué. Cet entrainement en rotation peut s'effectuer par tout moyen connu et approprié. Par exemple, les rouleaux (1) sont entrainés par un ou plusieurs moteurs (2), en combinaison avec des trains d'engrenage (3). A noter que l'entrainement en rotation des rouleaux, peut également être asservi à un organe du type volant d'inerte, pour soumettre le pneumatique à une force de pression importante pendant un laps de temps très court.

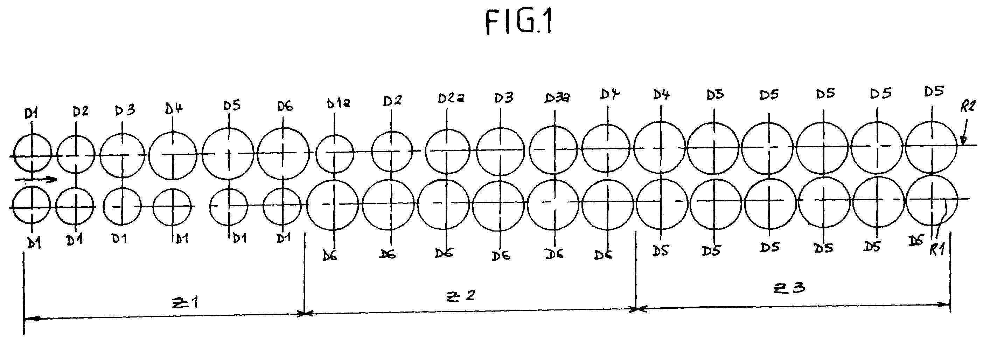

Dans chaque zone (Z1) (Z2) (Z3), les rouleaux sont de diamètres différents et déterminés pour remplir les fonctions sus-indiquées. On renvoie à la figure 1 des dessins.

Dans la première zone (Z1), les rouleaux (1) du rang inférieur (R1), sont tous de même diamètre, soit (D1) ces diamètres. Les rouleaux du rang supérieur (R2), sont de diamètres progressivement croissants. Le diamètre du premier rouleau de ce rang supérieur est égal ou sensiblement égal aux diamètres (D1) des rouleaux du rang inférieur. Soit (D1) (D2) (D3) (D4) (D5) et (D6) les diamètres des rouleaux (1) du rang supérieur (R2).

Dans la seconde zone (Z2), les rouleaux (1) du rang inférieur (R1), sont tous de même diamètre (D6). Ce diamètre (D6) est égal ou sensiblement égal au diamètre du dernier rouleau du rang supérieur de la première zone (Z1). Les rouleaux du rang supérieur (R2) sont de diamètres progressivement croissants. Le diamètre du premier rouleau de ce rang supérieur (D1a) est égal ou sensiblement égal au diamètre (D1) du premier rouleau du rang supérieur ou inférieur de la première zone (Z1). Soit (D1a) (D2) (D2a) (D3) (D3a) et (D4) les diamètres des rouleaux (1) du rang supérieur (R2).

Dans la troisième zone (Z3), les rouleaux (1) du rang inférieur (R1), sont tous de même diamètre (D5). Ce diamètre (D5) est très légèrement inférieur aux diamètres (D6) des rouleaux du rang inférieur (R1) de la deuxième zone (Z2). Les rouleaux du rang supérieur (R2) ont un diamètre (D5) égal à celui des rouleaux du rang inférieur (R1), à l'exception du premier rouleau, dont le diamètre (D4) est égal à celui du dernier rouleau du rang supérieur (R2) de la zone (Z2).

Il apparait donc que la vitesse angulaire des différents rouleaux est constante, tandis que la vitesse d'entrainement linéaire n'est pas constante, compte-tenu de cette sélection de différences de diamètres. On n'exclut pas d'autres moyens pour obtenir ce différentiel de vitesses, aptes à soumettre le pneumatique à un effort de pression combiné à un mouvement de déplacement linéaire alternatif.

Les différents rouleaux (1) sont montés entre deux flasques latéraux de guidage (4) (5). En outre, les différents rouleaux, tels que définis, sont disposés d'une manière très sensiblement tangente dans un plan très sensiblement vertical. Ces dispositions obligent le pneumatique à suivre le cheminement linéaire délimité par les rouleaux, en lui évitant de remonter entre deux rouleaux successifs.

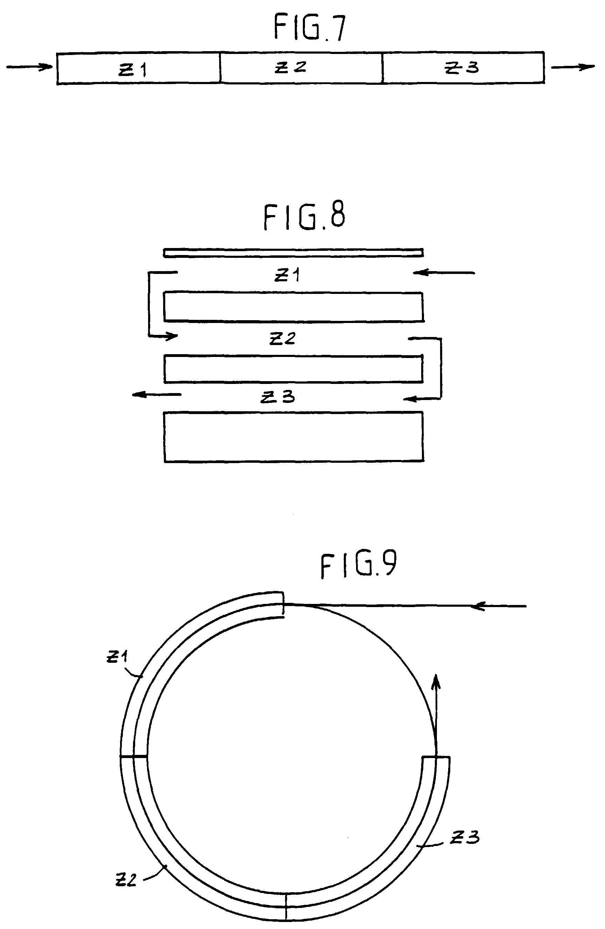

L'ensemble de l'appareil tel que défini, est monté sur tous types de châssis supports (6). Compte-tenu de la conception de l'appareil et de son principe de fonctionnement, ce dernier peut présenter des formes géométriques diverses. Par exemple, les zones (Z1) (Z2) (Z3) peuvent être disposées soit linéairement, soit en superposition, soit en juxtaposition, soit d'une manière circulaire (figures 7, 8 et 9).

A la sortie de l'appareil, c'est-à-dire à la sortie de la zone (Z3), la poudre obtenue de matière caoutchouteuse et d'acier, est récupérée par tout moyen connu et approprié. A cet égard, cette poudre, peut ensuite être soumise à des moyens parfaitement connus par un homme du métier, permettant de séparer les particules caoutchouteuses des particules métalliques. De même, l'introduction des pneumatiques au niveau de la zone (Z1) peut s'effectuer soit manuellement, soit automatiquement.

A noter que les vitesses d'entrainement des rouleaux et le choix des diamètres sont déterminés pour diminuer au maximum les phénomènes d'échauffements.

Les avantages ressortent bien de la description, en particulier on souligne et on rappelle :
- la simplicité de réalisation,
- la décohésion du caoutchouc obtenue sans outil de coupe, mais en utilisant directement l'armature métallique de la structure caoutchouteuse,
- le fait de travailler à une température ambiante sans préparation préalable du pneumatique,
- la suppression des phénomènes d'usure contrairement à un broyeur,
- la possibilité de réaliser un appareil dynamique, pour le transporter sur un site quelconque, en vue de traiter les pneumatiques,
- la fiabilité de fonctionnement,
- l'efficacité du résultat obtenu,
- aucun rejet dans l'environnement,
- autonomie de l'appareil,
- la possibilité de réaliser un appareil portable.

## Revendications

1. Appareil pour le traitement d'articles, notamment de pneumatiques, comprenant une armature métallique (A) et/ou textile noyée dans l'épaisseur d'une matière caoutchouteuse, comprenant au moins deux rangs (R1) (R2) de rouleaux tournants (1), à axe parallèle, et superposés deux à deux, les articles étant engagés à plat, entre lesdits rouleaux. aptes à assurer en continu et successivement, la décohésion de la matière caoutchouteuse (M), en vue de la séparer de l'armature métallique (A), pour constituer une poudre résultant d'un mélange de caoutchouc et de particules métalliques et/ou textiles, caractérisé en ce que les rouleaux du premier rang (R2) sont entrainés positivement dans le même sens de rotation, à des vitesses linéaires différentes, tandis que les rouleaux de l'autre rang (R1) tournent dans l'autre sens pour entrainer par frottement, les articles.

2. Appareil selon la revendication 1, caractérisé en ce que les rouleaux (1) sont conformés et/ou assujettis à des moyens pour exercer un effort de pression sur l'article à traiter, combiné à un mouvement de frottement par déplacement relatif entre ledit article et lesdits rouleaux.

3. Appareil selon la revendication 1, caractérisé en ce que les rouleaux délimitent trois zones distinctes et continues (Z1 (Z2) (Z3) correspondant chacune à une fonction, à savoir :
- décohésion primaire de la matière caoutchouteuse, pour la décoller par rapport à l'armature métallique,
- écartement de la matière caoutchouteuse, par rapport à l'armature métallique,
- séparation de la matière caoutchouteuse et de l'armature métallique pour obtenir une poudre.

4. Appareil selon la revendication 3, caractérisé en ce que les rouleaux (1) sont entrainés à la même vitesse angulaire, et sont, dans chaque zone (Z1) (Z2) (Z3), de diamètres différents.

5. Appareil selon la revendication 3, caractérisé en ce que :
- la première zone (Z1) comprend un rang inférieur (R1) de rouleaux de même diamètre et un rang supérieur (R2) de rouleaux de diamètres progressivement croissants, et dont le premier rouleau est de diamètre sensiblement égal aux diamètres des rouleaux de la rangée inférieure,
- la deuxième zone (Z2) comprend un rang inférieur (R1) de rouleaux de même diamètre très sensiblement égal au diamètre du dernier rouleau du rang supérieur de la première zone, et un rang supérieur de rouleaux de diamètres progressivement croissants, et dont le premier rouleau est de diamètre sensiblement égal au diamètre du premier rouleau des rangs supérieur ou inférieur de la première zone,
- la troisième zone (Z3) comprend un rang inférieur (R1) de rouleaux de même diamètre très légèrement inférieur aux diamètres des rouleaux du rang inférieur de la deuxième zone, et un rang supérieur (R2) de rouleaux de mêmes diamètres que ceux du rang inférieur,

6. Appareil selon la revendication 1, caractérisé en ce que les rouleaux (1) sont agencés pour être entrainés simultanément en rotation au moyen d'un ou plusieurs moteurs (2), en combinaison ou non avec un organe du type volant d'inertie, pour soumettre l'article à une force de pression pendant un laps de temps très court.

7. Appareil selon la revendication 1, caractérisé en ce que les rouleaux (1) sont montés entre deux flasques latéraux de guidage (4) (5), d'une manière très sensiblement tangente dans un plan sensiblement vertical.

8. Appareil selon la revendication 1, caractérisé en ce que les zones (Z1) (Z2) (Z3) des rouleaux sont disposées soit linéairement, soit en superposition, soit en juxtaposition.

## Claims

1. Apparatus for processing articles, especially tyres, comprising a metal and/or textile bracing (A) embedded in the thickness of a rubber material, comprising at least two rows (R1) (R2) of rotating rolls (1), having parallel axes and being superposed in pairs, the articles being engaged flat between the said rolls, which are capable of causing, continuously and successively, deconsolidation of the rubber material (M), for the purpose of separating it from the metal bracing (A), in order to form a resulting powder consisting of a mixture of rubber and of metal and/or textile particles, characterized in that the rolls of the first row (R2) are positively driven in the same direction of rotation but at different linear speeds, while the rolls of the other row (R1) rotate in the opposite direction in order to drive the articles forward, by friction.

2. Apparatus according to Claim 1, characterized in that the rolls (1) are shaped and/or fastened to means for exerting a compressive force on the article to be processed, combined with a frictional movement by relative displacement between the said article and the said rolls.

3. Apparatus according to Claim 1, characterized in that the rolls delimit three separate and continuous zones (Z1) (Z2) (Z3), each corresponding to one function, namely:
- primary deconsolidation of the rubber material in order to debond it from the metal bracing;
- movement of the rubber material away from the metal bracing;
- separation of the rubber material and the metal bracing in order to obtain a powder.

4. Apparatus according to Claim 3, characterized in that the rolls (1) are driven at the same angular speed and, in each zone (Z1) (Z2) (Z3), have different diameters.

5. Apparatus according to Claim 3, characterized in that:
- the first zone (Z1) comprises a bottom row (R1) of rolls of the same diameter and a top row (R2) of rolls of gradually increasing diameters, the first roll of the top row having a diameter much the same as the diameters of the rolls of the bottom row;
- the second zone (Z2) comprises a bottom row (R1) of rolls of the same diameter, which is very much the same as the diameter of the last roll of the top row of the first zone, and a top row of rolls of gradually increasing diameters, the first roll of the top row having a diameter much the same as the diameter of the first roll of the top or bottom rows of the first zone;
- the third zone (Z3) comprises a bottom row (R1) of rolls of the same diameter, which is very slightly less than the diameters of the rolls of the bottom row of the second zone, and a top row (R2) of rolls of the same diameters as those of the bottom row.

6. Apparatus according to Claim 1, characterized in that the rolls (1) are arranged to be rotated simultaneously by means of one or more motors (2), which may or may not be combined with a device of the flywheel type, in order to subject the article to a compressive force for a very short period of time.

7. Apparatus according to Claim 1, characterized in that the rolls (1) are mounted between two lateral guide plates (4) (5) in a very approximately tangential manner in an approximately vertical plane.

8. Apparatus according to Claim 1, characterized in that the zones (Z1) (Z2) (Z3) of the rolls are organized either in a linear fashion or in superposition or in juxtaposition.

## Patentansprüche

1. Gerät für die Behandlung von Artikeln - insbesondere von Reifen - mit einer in die Dicke eines Gummimaterials eingelassenen metallischen (A) und/oder textilen Bewehrung, bestehend aus mindestens zwei Reihen (R1) (R2) parallelachsiger und paarweise übereinanderliegender Drehrollen (1), wobei die Artikel flach zwischen die Rollen eingeführt werden, die geeignet sind, fortlaufend und nacheinander das Gummimaterial (M) zu entfestigen, um es von der metallischen Bewehrung (A) zu trennen, und ein Pulver zu bilden, das aus der Vermischung von Gummi und metallischen und/oder textilen Partikeln hervorgeht, dadurch gekennzeichnet, daß die Rollen der ersten Reihe (R2) bei verschiedenen linearen Geschwindigkeiten kraftschlüssig in der gleichen Drehrichtung mitgeführt werden, während die Rollen der anderen Reihe (R1) in der anderen Richtung umlaufen, um die Artikel durch Reibung mitzunehmen.

2. Gerät nach Anspruch 1, dadurch gekennzeichnet, daß die Rollen (1) so ausgebildet und/oder von Einrichtungen abhängig sind, daß sie auf den zu behandelnden Artikel eine Druckkraft ausüben, die mit einer Reibungsbewegung durch relative Verschiebung zwischen dem Artikel und den Rollen kombiniert ist.

3. Gerät nach Anspruch 1, dadurch gekennzeichnet, daß die Rollen drei unterschiedliche und fortlaufende Zonen (Z1) (Z2) (Z3) begrenzen, die jeweils einer bestimmten Funktion entsprechen, nämlich:
- primäre Entfestigung des Gummimaterials, um es von der Metallbewehrung zu lösen,
- Entfernung des Gummimaterials von der Metallbewehrung,
- Trennung des Gummimaterials und der Metallbewehrung zur Erzielung eines Pulvers.

4. Gerät nach Anspruch 3, dadurch gekennzeichnet, daß die Rollen (1) mit der gleichen Winkelgeschwindigkeit angetrieben werden und in jeder Zone (Z1) (Z2) (Z3) einen anderen Durchmesser besitzen.

5. Gerät nach Anspruch 3, dadurch gekennzeichnet, daß:
- die erste Zone (Z1) eine untere Reihe (R1) mit Rollen gleichen Durchmessers und eine obere Reihe (R2) mit Rollen zunehmend größeren Durchmessers umfaßt, wobei der Durchmesser der ersten Rolle ungefähr den Durchmessern der Rollen der unteren Reihe entspricht,
- die zweite Zone (Z2) eine untere Reihe (R1) mit Rollen gleichen Durchmessers, der ziemlich genau dem Durchmesser der letzten Rolle der oberen Reihe der ersten Zone entspricht, und eine obere Reihe mit Rollen zunehmend größeren Durchmessers umfaßt, wobei der Durchmesser der ersten Rolle ungefähr dem Durchmesser der ersten Rolle der oberen bzw. unteren Reihe der ersten Zone entspricht,
- die dritte Zone (Z3) eine untere Reihe (R1) mit Rollen gleichen Durchmessers, der geringfügig kleiner ist als die Durchmesser der Rollen der unteren Reihe der zweiten Zone, und eine obere Reihe (R2) umfaßt, deren Rollen die gleichen Durchmesser wie diejenigen der unteren Reihe aufweisen.

6. Gerät nach Anspruch 1, dadurch gekennzeichnet, daß die Rollen (1) so beschaffen sind, daß sie gleichzeitig durch einen oder mehrere Motoren (2) mit oder ohne schwungradartigem Organ angetrieben werden, um den Artikel während einer sehr kurzen Zeitspanne einer Druckkraft auszusetzen.

7. Gerät nach Anspruch 1, dadurch gekennzeichnet, daß die Rollen (1) ziemlich genau tangential in einer ungefähr senkrechten Ebene zwischen zwei seitlichen Führungswänden (4) (5) angebracht sind.

8. Gerät nach Anspruch 1, dadurch gekennzeichnet, daß die Rollenzonen (Z1) (Z2) (Z3) linear oder übereinander oder nebeneinander angeordnet sind.
